# EUROPEAN PATENT SPECIFICATION

(11) **EP 2 611 569 B1**
(45) Date of publication and mention of the grant of the patent: **16.11.2016**
(21) Application number: 11821220.8
(22) Date of filing: 24.08.2011
(51) Int. Cl.: B23Q 3/154, B25B 11/00

(54) **AN ELECTRO PERMANENT MAGNETIC WORK HOLDING SYSTEM HAVING ADDITIONAL SOLENOID(S) POSITIONED WITHIN THE MAIN POLE(S) OF THE WORKING FACE**
WERKSTÜCKSPANNVORRICHTUNG MIT EINEM ELEKTROPERMANENTMAGNETEN UND EINEM ODER MEHREREN ZUSÄTZLICHEN INNERHALB DES HAUPTPOLS/DER HAUPTPOLE DER OBERFLÄCHE DES WERKSTÜCKS POSITIONIERTEN MAGNETEN
SYSTÈME PORTE-PIÈCE ÉLECTROMAGNÉTIQUE À AIMANTS PERMANENTS PRÉSENTANT UN OU PLUSIEURS SOLÉNOÏDES ADDITIONNELS POSITIONNÉS DANS LE OU LES PÔLES PRINCIPAUX DE LA FACE DE TRAVAIL

(30) Priority: 01.09.2010 IN KO09782010
(43) Date of publication of application: 10.07.2013
(73) Proprietor: Sarda, Uttam, Kolkata 700064, West Bengal (IN)
(72) Inventor: Sarda, Uttam, Kolkata 700064, West Bengal (IN)
(74) Representative: Witte, Weller & Partner Patentanwälte mbB
(86) International application number: PCT/IN2011/000574
(87) International publication number: WO 2012/029073

(56) References cited:
- EP-A1- 0 408 776
- EP-B1- 0 345 554
- WO-A1-86/05429
- WO-A1-2008/032333
- WO-A1-2009/069146
- SU-A1- 1 756 257
- US-A- 4 530 028

## Description

The present invention relates to an electro permanent magnetic work holding system having additional solenoid(s) positioned within the main pole(s) of the working face. As used before and hereinafter in this specification the expression "main pole(s)", unless otherwise specified, signifies the pole (s) positioned above the reversible magnets, and the walls of the apparatus have effectively been utilized as 'secondary' or 'auxiliary' poles.

More particularly, this invention relates to an electro permanent magnetic work holding system in which the working surface is made up of a monolithic block of steel and additional solenoids are positioned within the main pole(s) of the working face which enhances the performance of the system.

In the prior art, Electro permanent magnetic (EPM) work holding apparatuses of flux reversal type are known in which a magnetic circuit is activated or deactivated by changing the polarity of the permanent magnets inside the apparatus. These devices use intrinsic energy of the permanent magnetic device but instead of being switched "ON" or "OFF" mechanically, it requires electrical pulse similar to electro magnetic devices but only momentarily delivered by an electrical winding.

Once switched "ON", these devices provide magnetic force for infinite duration of time independent of any external energy source. For instance, US Patent No. 4507635 granted to Michele Cardone of Milan, Italy, pertains to a magnetic anchoring apparatus, comprising in combination: an external ferromagnetic crown provided with a base plate and lateral walls; at least one group of four pole pieces defining pairs of corresponding poles of an anchoring surface, said pole pieces presenting their longitudinal axes at right angles to the base place and in correspondence with the apexes of a square. Moreover, the apparatus comprises a plurality of permanent magnets for feeding the aforesaid poles, interposed between the pole pieces, and between the latter and said ferromagnetic crown.

Since the magnet uses the polarity of permanent magnets a complete demagnetization or switching 'OFF' of the work piece is often difficult. Also the demagnetization is a function of the job being clamped as materials which have more retentively are difficult to be de-clamped from these work holding apparatuses.

For better demagnetization the same inventor proposed the use of another set of electrical winding on an intermediate pole member for better demagnetization as per application EP0345554 titled MAGNETIC GRIPPING APPARATUS HAVING CIRCUIT FOR ELIMINATING RESIDUAL FLUX, which forms the basis for the preamble of claim 1.

The problem of prior art was that the solenoids which were used to demagnetize the job were placed at the intermediate pole member and not on main poles holding the work piece.

Present invention aims at circumventing and finding an effective solution to the difficulties mentioned above.

The principal object of this invention is to provide an electro permanent magnetic work holding system having additional solenoid(s) positioned within the main pole(s) of the working face.

A further object of this invention is to provide a work holding apparatus having a ferrous working face, preferably monolithic in nature, with slots separating the main magnetic poles.

A still further object of this invention is to provide a work holding apparatus having a ferrous working face having additional solenoids positioned within the main poles thereof for better clamping and de-clamping of the work piece.

Another object of this invention is to provide an EPM work holding apparatus having a working face wherein the direction of energising the additional solenoid(s) can be either along or against the direction of the flux emanating from the main poles of the electro permanent magnets, thus ensuring better clamping and de-clamping.

Yet another object of the subject invention is to provide a novel EPM work holding apparatus having additional solenoid(s) positioned within the main pole(s) of the working face which ensures prompt release of the work piece from the said working face owing to proper demagnetisation of the work piece by the said additional solenoid(s).

The foregoing objects are achieved by the intention which relates to an Electro Permanent work holding system characterized in that the said system comprises a work holding face , a base plate ,a set of reversible magnets , solenoid(s)for controlling reversible magnets , main pole(s) positioned above the reversible magnets , a set of non-reversible permanent magnets , set of additional solenoid(s) within the main poles of the working surface and magnetic insulator.

The present invention provides an apparatus that has separate solenoid(s) at the working face which can be energised separately or in conjunction with the EPM assembly in the system.

The solenoids help in improving the following:-
1. Energising the additional Solenoids to provide a magnetic flux which is in the same direction of the flux emerging from the Electro Permanent Magnetic system thereby generating more Magnetic Flux for proper holding of work piece.
2. Energising the additional Solenoids to provide a magnetic flux which is in the reverse direction of the flux emerging from the Electro Permanent Magnetic system thereby reducing the Magnetic Flux. This feature is essential when thin work pieces are involved and high flux is detrimental for the operation.
3. The additional Solenoids can also be used for demagnetizing the work pieces once the Electro Permanent Magnetic system has been switched off. It has been observed that the work piece normally remains stuck to the Electro Permanent Apparatus even when system has been de-energized because of residual magnetism which is more apparent on high carbon steel or hardened steel which has high retentively.
4. As the additional solenoids are directly placed in the working face of the work holding apparatus, it can be used very effectively to monitor Flux to ascertain whether the system has magnetised properly. This can be useful to ascertain whether optimum clamping is achieved prior to operations.
5. The additional solenoids can be used to detect displacement of the work piece from the desired position during operation. This can be interlocked with the machine to reduce accidental damages to the machine and/ or the job.

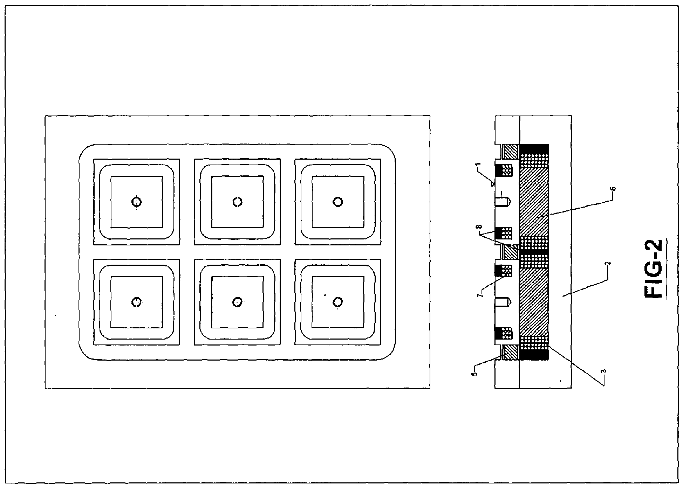

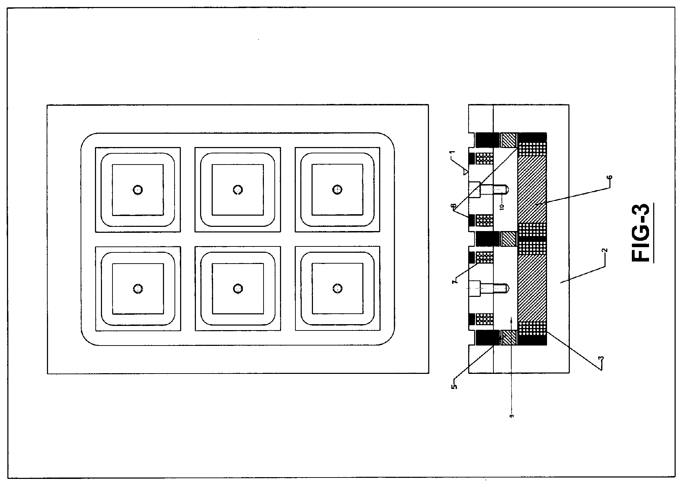

The placement of additional solenoid on the working face of the apparatus can be done in different ways and has been illustrated in the Figs 2 and 3.

Fig. 1 shows a prior art Electro Permanent Magnetic system.

Fig. 2 shows an Electro Permanent Magnetic system made having additional solenoids in the working face.

Fig. 3 shows additional solenoids placed appropriately on a separate monolithic Plate which matches the working face of the EPM apparatus.

Fig. 4 shows an Electro Permanent Magnetic system made from monolithic working face having additional solenoids which are inserted from the bottom side thus eliminating the use of non magnetic material like Epoxy on the top side.

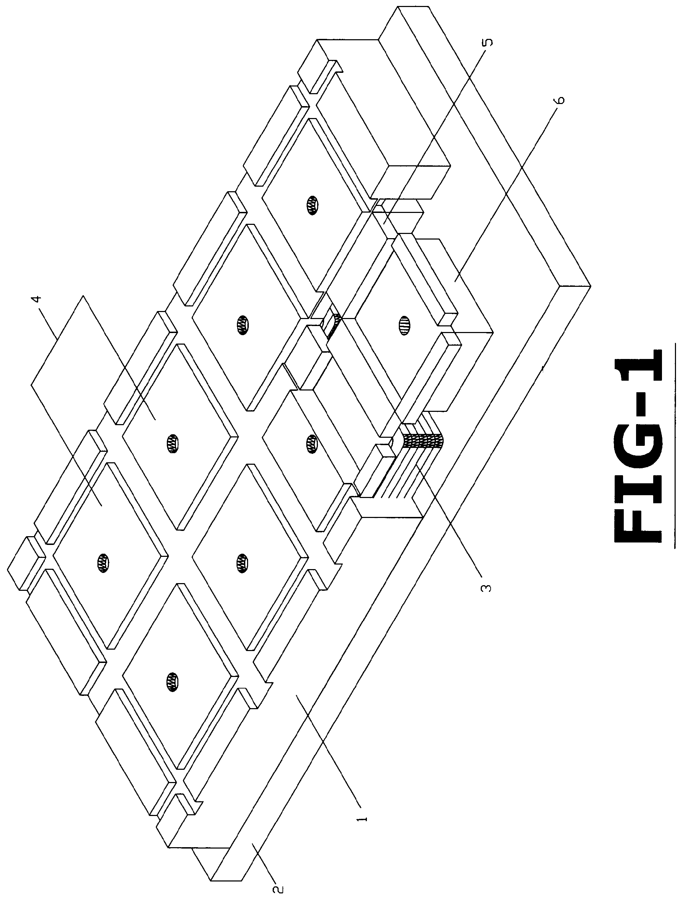

The invention will be further defined by means of the illustrated drawings accompanying the specification wherein:-
Fig. 1 depicts the conventional EPM work holding system in a longitudinal cross sectional view of the top surface in which (1) is the work holding face, (2) is the bottom surface, (3) stands for electrical windings for controlling reversible magnets, (4) denotes main poles, (5) is the first set of reversible magnets and (6) is the second set of non reversible permanent magnets;
Fig. 2 shows a system of this invention having additional in the working face wherein (1), (2), (3), (5) and (6) have the same significance as in Fig 1 narrated above, (7) shows the additional solenoids and (8) is the magnetic insulator and
Fig. 3 shows additional solenoids placed on a separate plate wherein (1), (2), (3), (5), (6), (7) and (8) have the same significance as given in Fig 2 and 9 shows additional plate with fixing means (10) carrying the solenoids.

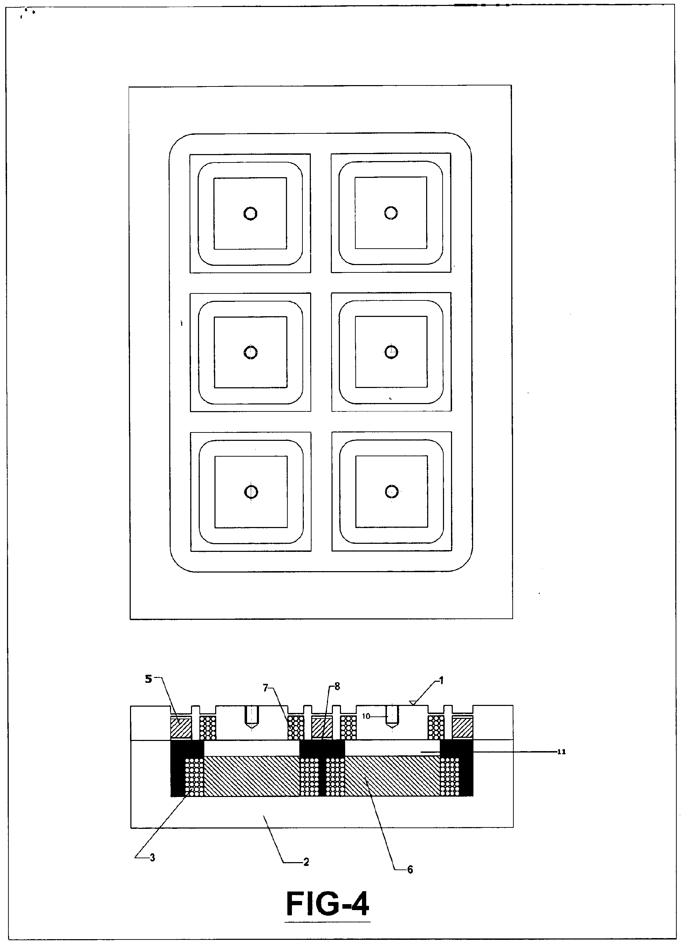

Fig. 4 shows additional solenoids inserted from the bottom side of the working surface wherein (1), (2), (3), (5), (6), (7) and (8) have the same significance as given in Fig 2 and 11 shows additional Steel plate. The work holding apparatus has thus no epoxy on the top surface.

The placement of solenoid in the working face of the apparatus can be done in different ways and two such arrangements have been illustrated in Figs. 2 and 3 of the drawings.

Additional modifications and improvements of the present invention may also be apparent to those skilled in the art. Thus the particular combination of parts described and illustrated herein is intended to represent only one embodiment of this invention with a variation and is not intended to serve as limitation of alternative devices or features within the spirit and scope of the invention.

Having described the invention in detail with particular reference to the illustrative drawings accompanying both provisional and complete specifications, it will now be made more specifically defined by the claims appended hereafter.

## Claims

1. An electro-permanent work holding system comprising a work holding face (1), a base plate (2), a set of reversible magnets (5), solenoid(s) for controlling reversible magnets (3), main pole(s) (4) positioned above the reversible magnets, a set of non-reversible permanent magnets (6), **characterized by** a set of additional solenoid(s) (7) within the main poles of the working surface and magnetic insulator (8).

2. A work holding system as claimed in claim 1, **characterized in that** the additional solenoid(s) may be utilized for demagnetizing the work pieces in the wake of switching off of the EPM system, thereby overcoming residual magnetism which tends to hold back the work piece.

3. A work holding system as claimed in Claims 1 and 2, **characterized in that** additional solenoid(s) generate magnetic fluxes in the same direction as the flux emerging from the EPM system, thereby ensuring proper holding of the work piece due to accentuation of magnetic fluxes.

4. A work holding system as claimed in Claims 1 and 2, **characterized in that** the said additional solenoid(s) are adapted to generate magnetic fluxes on being energized, but in reverse direction of the fluxes emerging from the system resulting in reduction of quantum of fluxes, being particularly suited for this work pieces for which excessive flux might prove detrimental.

5. Use of a work holding system according to any of claims 1 to 4 for effectively monitoring fluxes to ascertain whether the system has attained a desired degree of magnetization.

6. Use of a work holding system according to any of claims 1 to 4 for detecting displacement of work piece from a desired position during the course of operation.

## Patentansprüche

1. Elektro-permanentes Werkstückhaltesystem mit einer Werkstückhaltefläche (1), einer Basisplatte (2), einem Satz von reversiblen Magneten (5), mit Spule(n) zum Steuern der reversiblen Magneten (3), wobei der Hauptpol (die Hauptpole) (4) oberhalb der reversiblen Magneten angeordnet ist (sind), mit einem Satz von nicht reversiblen Permanentmagneten (6), **gekennzeichnet durch** einen Satz von zusätzlichen Spule(n) (7) innerhalb der Hauptpole der Arbeitsfläche und des magnetischen Isolators (8).

2. Werkstückhaltesystem nach Anspruch 1, **dadurch gekennzeichnet, dass** die zusätzliche(n) Spule(n) zur Demagnetisierung der Werkstücke im Falle der Abschaltung des EPM-Systems verwendet werden kann (können), wodurch ein verbleibender Magnetismus überwunden wird, der dazu tendiert, das Werkstück zurückzuhalten.

3. Werkstückhaltesystem nach Anspruch 1 und 2, **dadurch gekennzeichnet, dass** die zusätzliche(n) Spule(n) einen Magnetfluss in derselben Richtung wie der von dem EPM-System hervorgehende Fluss erzeugt (erzeugen), wodurch ein sicheres Halten des Werkstücks infolge von Verstärkung des magnetischen Flusses sichergestellt wird.

4. Werkstückhaltesystem nach Anspruch 1 und 2, **dadurch gekennzeichnet, dass** die zusätzliche(n) Spule(n) dazu ausgebildet sind, bei der Aktivierung magnetische Flüsse zu erzeugen, jedoch in umgekehrter Richtung der Flüsse, die von dem System ausgehen, was zur Reduzierung der Größe der Flüsse führt, was insbesondere für Werkstücke geeignet ist, für die sich ein übergroßer Fluss als nachteilig erweisen könnte.

5. Verwendung eines Werkstückhaltesystems nach irgendeinem der Ansprüche 1 bis 4 zur wirksamen Überwachung von Flüssen, um festzustellen, ob das System einen gewünschten Grad der Magnetisierung erreicht hat.

6. Verwendung eines Werkstückhaltesystems nach irgendeinem der Ansprüche 1 bis 4 zum Detektieren der Verschiebung eines Werkstückes von einer gewünschten Position während des Betriebs.

## Revendications

1. Système porte-pièce électromagnétique à aimants permanents comportant une face porte-pièce (1), une semelle (2), un ensemble d'aimants réversibles (5), un ou des solénoïdes servant à commander les aimants réversibles (3), un ou des pôles principaux (4) positionnés au-dessus des aimants réversibles, un ensemble d'aimants permanents non réversibles (6), **caractérisé par** un ensemble de solénoïdes supplémentaires (7) à l'intérieur des pôles principaux de la surface de travail et un isolant magnétique (8).

2. Système porte-pièce selon la revendication 1, **caractérisé en ce que** le ou les solénoïdes supplémentaires peuvent être utilisés pour démagnétiser les pièces à la suite de la mise hors tension du système EPM, surmontant ainsi un magnétisme résiduel qui tend à retenir la pièce.

3. Système porte-pièce selon les revendications 1 et 2, **caractérisé en ce qu'**un ou des solénoïdes supplémentaires génèrent des flux magnétiques dans le même sens que le flux émanant du système EPM, assurant ainsi un maintien correct de la pièce du fait de l'accentuation des flux magnétiques.

4. Système porte-pièce selon les revendications 1 et 2, **caractérisé en ce que** ledit ou lesdits solénoïdes supplémentaires sont prévus pour générer des flux magnétiques lorsqu'ils sont alimentés, mais dans le sens inverse des flux émanant du système, ce qui se traduit par une réduction de la quantité de flux, qui convient tout particulièrement aux pièces pour lesquelles un flux excessif pourrait s'avérer dommageable.

5. Utilisation d'un système porte-pièce selon l'une quelconque des revendications 1 à 4 pour surveiller efficacement des flux afin de déterminer si le système a atteint un degré souhaité de magnétisation.

6. Utilisation d'un système porte-pièce selon l'une quelconque des revendications 1 à 4 pour détecter un décalage d'une pièce par rapport à une position souhaitée en cours de fonctionnement.
